(19) Europäisches Patentamt
European Patent Office
Office européen des brevets

(11) EP 2 832 784 A1

(12) EUROPEAN PATENT APPLICATION
published in accordance with Art. 153(4) EPC

(43) Date of publication:
04.02.2015 Bulletin 2015/06

(21) Application number: 13769270.3

(22) Date of filing: 28.03.2013

(51) Int Cl.:
*C08J 9/12* (2006.01)

(86) International application number:
PCT/JP2013/059416

(87) International publication number:
WO 2013/147104 (03.10.2013 Gazette 2013/40)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 30.03.2012 JP 2012083015

(71) Applicant: Sekisui Chemical Co., Ltd.
Osaka-shi, Osaka 530-8565 (JP)

(72) Inventors:
- YAHARA, Kazuyuki
Mishima-gun
Osaka 618-0021 (JP)
- TOEI, Yozo
Mishima-gun
Osaka 618-0021 (JP)
- DOHI, Akihito
Hasuda-shi
Saitama 349-0198 (JP)
- TANIKAWA, Yuji
Mishima-gun
Osaka 618-0021 (JP)

(74) Representative: Merkle, Gebhard
Ter Meer Steinmeister & Partner
Patentanwälte mbB
Mauerkircherstrasse 45
81679 München (DE)

# (54) POROUS BODY

(57) Provided is a porous body, which is formed of a resin obtained by crosslinking a copolymer of ethylene, an α-olefin, and a non-conjugated diene, wherein porosity of the porous body is in the range of 50 to 95% by volume, strength of the porous body at 50% compression is 300 kPa or less, and compression set (A) under atmosphere at a temperature of 80°C and a relative humidity of 90% is 20% or less.

EP 2 832 784 A1

**Description**

TECHNICAL FIELD

The present invention relates to a porous body formed of a resin which is obtained by crosslinking a copolymer of ethylene, an α-olefin, and a non-conjugated diene.

BACKGROUND ART

The porous body obtained by a treatment such as blowing of a resin composition mainly comprising an olefin resin and an elastomer may be exemplified by foam bodies of thermoplastic resins such as a polyethylene resin and a polypropylene resin, foam bodies of rubbers such as a synthetic rubber and a natural rubber, and so forth. These porous bodies are used in many fields including fields of architecture, civil engineering construction, electric appliances, electronics, and vehicles as a part which requires protection from a gas or a liquid, a seal material which seals a peripheral part of a chassis, and a cushioning material which damps vibration and impact.
As one example of porous resin materials, a proposal was made as to a foam body having air holes inside a resin which is produced by a process in which an extra-high density polyethylene resin having a specific density added with a blowing agent is processed to form a sheet, which is then followed by crosslinking treatment and blowing treatment (see, Patent Document 1).
When a porous body is used as a seal material or a cushioning material, several characteristics are required, including that compression flexibility of a porous body, i.e., a repulsive stress of a porous body to recover from compression, is arranged appropriately in accordance with quality of a material of a good in which the said porous body is used and with a use condition thereof; and that the thus arranged repulsive stress and a seal performance are kept during a usable period of a good in which the porous body is used.
For example, in an electronics field, downsizing of a device is advancing markedly. In a small electronic device having a display area such as a mobile phone, the ratio of the display area to the main chassis surface is desired as large as possible. Because of this, thickness required to a porous body to be disposed between a display panel and a chassis tends to be thinner than ever and the width thereof tends to be narrower as well.
In the case of the foam body described in Patent Document 1, if the expansion ratio thereof is made higher, it is possible to enhance the flexibility thereof, but thickness of the foam body also increases by making the expansion ratio higher. Accordingly, in order to satisfy the required impact resistance while having sufficient flexibility under the constraints of required thickness and width, further improvement is desired.
In addition, increase or decrease of volume of the porous body caused by change of use environment, especially caused by changes of temperature and humidity, constitutes the factors to cause deterioration in flexibility, rupture strength, and so forth. Accordingly, sluggish deterioration thereof caused by changes of environmental conditions such as temperature and humidity, that is, superior environmental characteristics are required throughout during usable period thereof.
Patent Document 1: International Publication No. WO2005/007731

SUMMARY OF THE INVENTION

PROBLEMS TO BE SOLVED BY THE INVENTION

The present invention has an object to provide a porous body having superior environmental characteristics and flexibility at the same time.

MEANS FOR SOLVING THE PROBLEMS

Inventors of the present invention carried out an extensive investigation; and as a result, it was found that the afore-mentioned problems could be solved by adjusting porosity, strength at 50% compression, and compression set (A) under the atmosphere at a temperature of 80°C and a relative humidity of 90%; and based on this finding, the present invention could be completed.
The present invention includes the following content.

(1) A porous body, which is formed of a resin obtained by crosslinking a copolymer of ethylene, an α-olefin, and a non-conjugated diene, wherein porosity of the porous body is in the range of 50 to 95% by volume, strength of the porous body at 50% compression is 300 kPa or less, and compression set (A) under atmosphere at a temperature of 80°C and a relative humidity of 90% is 20% or less.

EFFECT OF THE INVENTION

According to the present invention, a porous body having superior environmental characteristics and flexibility at the same time can be provided.

MODES FOR CARRYING OUT THE INVENTION

Porous Body

The porous body of the present invention is a porous body formed of a resin which is obtained by crosslinking a copolymer of ethylene, an $\alpha$-olefin, and a non-conjugated diene, wherein porosity of the porous body is in the range of 50 to 95% by volume, strength of the porous body at 50% compression is 300 kPa or less, and compression set (A) under atmosphere at a temperature of 80°C and a relative humidity of 90% is 20% or less.

Characteristics of the Porous Body

(Porosity)

In the present invention, the term "porosity" means the volume ratio of the air portion relative to the total volume of the porous body. Porosity of the porous body may be measured, for example, by the procedure as described below.
A specimen with a square shape in a plane view, with length of 5 cm in each side, and with a constant thickness is cut out from the porous body. Thickness of the specimen is measured, volume ($V_1$) of the specimen is measured, and then weight ($W_1$) of the specimen is measured.
Next, apparent volume ($V_2$) occupied by the air portion is calculated by using the following equation.
Meanwhile, $\rho_A$ (g/cm$^3$) is used as the density of the resin to constitute the specimen.

$$\text{Apparent air portion volume } V_2 = (V_1 \cdot \rho_A - W_1)/\ \rho_A$$

$$\text{Porosity} = [(\text{apparent air portion volume } V_2)/(\text{specimen volume } V_1)] \times 100$$

Porosity of the porous body of the present invention is in the range of 50 to 90% by volume. If the porosity is less than 50% by volume, compressive stress becomes so large, thereby causing flotation of the member to clamp the porous body as well as deformation of the member by the repulsive stress to recover from the compressed state. If the porosity is more than 95% by volume, flexibility is enhanced too high to obtain sufficient cushioning property. Accordingly, in order to obtain appropriate compressive stress and sufficient cushioning performance, the porosity of the porous body is preferably in the range of 50 to 85% by volume, or more preferably in the range of 50 to 80% by volume.

(Continuous porosity)

The term "continuous porosity" means the ratio of pores connected from surface of the porous body to inside thereof relative to entirety of the pore. The continuous porosity may be measured, for example, by the procedure as described below.
The specimen is sunk in the depth of 100 mm from water surface in distilled water at 23°C, and the pressure of 15 kPa is applied to the specimen during the period of 3 minutes. Thereafter, the specimen is taken out from water, and then water attached on surface of the specimen is removed. Weight ($W_2$) of the specimen is measured, and then the continuous porosity $F_1$ is calculated by using the following equation. Meanwhile, from the continuous porosity, the independent porosity $F_2$ may be calculated.

$$\text{Continuous porosity } F_1\ (\%) = 100 \times (W_2 - W_1)/V_2$$

$$\text{Independent porosity } F_2\ (\%) = 100 - F_1$$

The continuous porosity of the porous body of the present invention is preferably 40% or more. If the continuous

porosity is 40% or more, the compressive stress is not too large; and because of the repulsive stress to recover from the compressed state, flotation of the member to clamp the porous body and deformation of the member may be prevented from occurring.

In the porous body of the present invention, in order to suppress the compressive stress from becoming too large, the continuous porosity thereof is preferably in the range of 45 to 100%, more preferably in the range of 50 to 100%, or still more preferably in the range of 70 to 100%.

(Strength at 50% compression)

The strength of the porous body at 50% compression is the value measured, for example, by the method according to JIS K6767.

The strength of the porous body of the present invention at 50% compression is 300 kPa or less. If the strength of the porous body at 50% compression is more than 300 kPa, it causes flotation of the member to clamp the porous body as well as deformation of the member by the repulsive stress to recover from the compressed state.

In order to prevent flotation of the member to clamp the porous body as well as deformation of the member from occurring, the strength of the porous body of the present invention at 50% compression is preferably 250 kPa or less, more preferably 200 kPa or less, still more preferably 100 kPa or less, or further still more preferably 85 kPa or less.

(Strength at 90% compression)

The strength of the porous body at 90% compression is preferably 500 kPa or less. If the strength of the porous body at 90% compression is 500 kPa or less, flotation of the member to clamp the porous body as well as deformation of the member by the repulsive stress to recover from the compressed state may be prevented from occurring. Meanwhile, the strength of the porous body at 90% compression is the value measured by the method according to JIS K6767.

In order to prevent flotation of the member to clamp the porous body as well as deformation of the member from occurring, the strength of the porous body of the present invention at 90% compression is preferably 400 kPa or less, more preferably 300 kPa or less, or still more preferably 200 kPa or less.

(Compression set (A))

The compression set (A) is the value obtained by the procedure as shown below.

A specimen with the thickness of 800 μm, the vertical length of 40 mm, and the horizontal length of 40 mm is cut out from the porous body; and this specimen is put under the 50% compression in the thickness direction and then kept under the atmosphere at a temperature of 80°C and a relative humidity of 90% for 22 hours. After it is released from this condition, it is allowed to stand under the atmosphere at a temperature of 23°C and a relative humidity of 55% for 30 minutes, and then, the sizes of vertical and horizontal sides are measured. By comparing them with the sizes before the test, the reduction rate relative to the original is calculated according to JIS K 6767 to obtain the compression set (A) shown by percentage.

The compression set (A) of the porous body of the present invention under the atmosphere at a temperature of 80°C and a relative humidity of 90% is 20% or less. If the compression set (A) of the porous body under the foregoing condition is more than 20%, it causes volume reduction by the use environment and the passage of the use time; and as a result of it, the compressive stress thereof does not meet the requirements any more, thereby leading to deterioration of flexibility and impact resistance.

In order to enhance flexibility and impact resistance, the compression set (A) of the porous body of the present invention under the atmosphere at a temperature of 80°C and a relative humidity of 90% is preferably 18% or less, or more preferably 15% or less.

(Compression set (B))

The compression set (B) is the value obtained by the measurement according to JIS K 6767 as described below.

A specimen with the thickness of 800 μm, the vertical length of 40 mm, and the horizontal length of 40 mm is cut out from the porous body; and this specimen is put under the 50% compression in the thickness direction and then kept under the atmosphere at a temperature of 70°C for 22 hours. After it is released from this condition, it is allowed to stand under the atmosphere at a temperature of 23°C for 30 minutes, and then, the sizes of vertical and horizontal sides are measured. By comparing them with the sizes before the test, the reduction rate relative to the original is calculated to obtain the compression set (B) shown by percentage.

In order to enhance flexibility and impact resistance, the compression set (B) of the porous body of the present invention is preferably 20% or less, more preferably 18% or less, or still more preferably 15% or less.

(Thickness of the porous body)

Thickness of the porous body is preferably in the range of 50 μm to 2 mm, or more preferably in the range of 100 μm to 1 mm. If thickness of the porous body is 50 μm or more, the required mechanical strengths can be secured. On the other hand, if thickness of the porous body is 2 mm or less, excellent flexibility can be obtained.

(Average foam diameter)

The average foam diameter of the porous body is preferably in the range of 10 to 250 μm, more preferably in the range of 50 to 150 μm, or still more preferably in the range of 90 to 110 μm.
If the average foam diameter thereof is within the above-mentioned range, the required flexibility may be obtained; and in addition, precision in thickness during formation of a film thereof may become higher.
Here, the term "average foam diameter" is the value obtained by the following method. That is, the cross section of the porous body is observed by the scanning electron microscope S-3400N (manufactured by Hitachi High-Technologies Corp.); and then, the average value of the diameters of arbitrarily selected 50 foams is calculated.

(Impact pressure)

In the porous body of the present invention, the impact pressure measured via the porous body in the state of 50% compression in its thickness when 55 g mass of an iron weight is dropped thereon from the height of 1 m is preferably 25 MPa or less, more preferably 23 MPa or less, or further more preferably 20 MPa or less. If the impact pressure is 25 MPa or less, sufficient cushioning performance can be obtained.
Here, the "impact pressure" may be obtained by the cushioning test method (called Sekisui method) as described below.
Specifically, the porous body is cut to the vertical length of 2 cm and the horizontal length of 2 cm; and the pieces thereby obtained are stacked such that the total thickness may become 0.15 cm to obtain the porous body sample.
A steel plate having the vertical length of 6 cm, the horizontal length of 6 cm, and the thickness of 2 mm, a pressure sensitive paper having the vertical length of 2 cm and the horizontal length of 2 cm (Prescale Paper for intermediate pressure, manufactured by Fujifilm Corp.), the above-mentioned porous body sample, and a steel plate having the vertical length of 6 cm, the horizontal length of 6 cm, and the thickness of 1 mm are stacked in this order from the bottom.
Then, four corners of the stack were clamped under the state of compression such that thickness of the porous body sample may become 50% from the original thickness to obtain the evaluation sample. This evaluation sample is fixed to a jig which has an open space in the central part thereof; and then, the weight having 55g mass is dropped from the height of 1 m toward the steel plate placed on top of the evaluation sample such that the maximum impact force may be added to the central part of the evaluation sample.
The pressure recorded on the pressure sensitive paper at this time is taken as the impact pressure. The impact pressure may be calculated by image analysis of the pressure sensitive paper by using the pressure image analysis system (Data Shot FPD-100, manufactured by Fujifilm Corp.).

(Average pore diameter)

In order to prevent destruction of cell walls during compression as well as breakage during manufacturing thereof from occurring, the average diameter of the pores is preferably in the range of 10 to 300 μm, preferably in the range of 90 to 250 μm, or still more preferably in the range of 100 to 245 μm.

(Average diameter of broken pores to connect between pores of the porous body)

The average diameter of broken pores to connect between pores of the porous body is preferably smaller than the average pore diameter and at the same time in the range of 0.1 to 30 μm. If the average diameter of the broken pores is within the foregoing range, the compressive stress may be kept properly and sufficient cushioning performance may be obtained. The average diameter of broken pores is preferably in the range of 2 to 27 μm, or more preferably in the range of 5 to 25 μm.

(Resin basis weight)

The resin basis weight (g/cm$^2$) is only the mass of the resin per 1 m$^2$ in the foam body sheet. In the present invention the resin basis weight is preferably 25g/m$^2$ or more, more preferably 30 g/m$^2$ or more, or still more preferably

40 g/$m^2$ or more. The resin basis weight within the foregoing range is preferable because the sufficient cushioning property can be obtained.

(Relationship between the expansion ratio and the continuous porosity)

In the present invention, the expansion ratio of the porous body is preferably less than 3, more preferably 2.5 or less, or still more preferably 2 or less.

If the expansion ratio is 3 or more, the continuous porosity is preferably 40% or more, more preferably 60% or more, or still more preferably 80% or more. If the expansion ratio and the continuous porosity are within the foregoing ranges, the compression set can be lowered.

(Relationship between the compressive elastic modulus of raw material resin and the expansion ratio)

In the preferable embodiment of the porous body of the present invention, the compressive elastic modulus of the raw material resin is in the range of 0.1 to 25 MPa, the expansion ratio thereof is in the range of 2 to 7, and the product of the expansion ratio of the raw material resin and the compressive elastic modulus is 75 or less (MPa·ratio). In this case, in view of the cushioning property and so forth of the porous body, the compressive elastic modulus of the raw material resin is preferably in the range of 1 to 15 MPa, or more preferably in the range of 2 to 10 MPa. In addition, in order to enhance the cushioning performance, the expansion ratio of the porous body is more preferably in the range of 2 to 6, or still more preferably in the range of 2 to 5. In considering the foregoing respective ranges, the afore-mentioned product is preferably 60 or less, or more preferably 50 or less.

Resin to Constitute the Porous Body

The resin to constitute the porous body of the present invention is formed of a resin which is a copolymer of ethylene, an α-olefin, and a non-conjugated diene (hereinafter this copolymer is referred to as copolymer A), or preferably a resin which is obtained by crosslinking these random copolymers.

(α-Olefin)

α-Olefins having 3 to 20 carbon atoms are preferable.

Illustrative example of the α-olefin includes propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecne, 1-eicosene, 9-methyl-1-decene, 11-methyl-dodecene, and 12-ethyl-1-tetradecene. Among them, α-olefins having 3 to 10 carbon atoms are preferable, while propylene, 1-butne, 1-hexene, and 1-octene are most preferably used. These α-olefins may be used solely or as a combination of two or more of them. Among the above-mentioned α-olefins, propylene is used utmost preferably.

(Non-conjugated diene)

The non-conjugated diene may be exemplified by linear non-conjugated dienes, alicyclic non-conjugated dienes, and further norbornene derivatives shown by the following general formula (I). These may be used solely or as a combination of two or more of them. The copolymer A is preferably a copolymer of ethylene, propylene, and a norbornene derivative.

[Chem. 1]

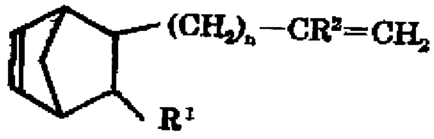

··· [I]

In the formula (I), character "n" represents an integer of 0 to 10; $R^1$ represents a hydrogen atom or an alkyl group having 1 to 10 carbon atoms; and $R^2$ represents a hydrogen atom or an alkyl group having 1 to 5 carbon atoms.

Specific example of the linear non-conjugated diene includes 1,4-hexadiene, 3-methyl-1,4-hexadiene, 4-methyl-1,4-hexadiene, 5-methyl-1,4-hexadiene, 4,5,-dimethyl-1,4-hexadiene, and 7-methyl-1,6-octadiene.

Specific example of the cyclic non-conjugated diene includes 5-methylene-2-norbornene, 1-methyl-5-methylene-2-norbornene, 1-ethyl-5-methylene-2-norbornene, 5-ethylidene-2-norbornene, 5-isopropyl-2-norbornene, 5-vinylidene-2-norbornene, 6-chloromethyl-5-isopropenyl-2-norbomene, dicyclopentadiene, and methyl tetrahydroindene.

Specific example of the norbornene derivative shown by the general formula (I) includes 5-vinyl-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methl-4-pentenyl)-2-norbornene, 5-(2,3-dimethyl-3-butenyl)-2-norbomene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene, and 5-(1,2,3-trimethyl-4-pentenyl)-2-norbornene.

Among them, 5-vinyl-2-norbornene, 5-(2-propenyl)-2-norbornene, 5-(3-butenyl)-2-norbornene, 5-(4-pentenyl)-2-norbornene, 5-(5-hexenyl)-2-norbornene, 5-(6-heptenyl)-2-norbornene, and 5-(7-octenyl)-2-norbornene are preferable. These norbornene compounds may be used solely or as a mixture of two or more of them. Among them, 5-vinyl-2-norbornene is especially preferably used.

Meanwhile, the non-conjugated diene to constitute the copolymer A may also be non-conjugated polyenes such as trienes including 2,3-diisopropylidene-5-norbornene, 2-ethylidene-3-isopropylidene-5-norbornene, and 2-propenyl-2,2-norbornadiene, in addition to the linear non-conjugated dienes, the alicyclic non-conjugated dienes, and the norbornene derivatives shown by the general formula (I). These may be used together with the afore-mentioned non-conjugated dienes.

(Ratio of resin components to constitute the porous body)

The blending ratio of ethylene in the resin of copolymer A is preferably in the range of 20 to 80 parts by mass, or more preferably in the range of 30 to 70 parts by mass, relative to 100 parts by mass of the copolymer.

The blending ratio of the $\alpha$-olefin in the resin of copolymer A is preferably in the range of 20 to 60 parts by mass, or more preferably in the range of 30 to 50 parts by mass, relative to 100 parts by mass of the copolymer.

The blending ratio of the non-conjugated diene in the resin of copolymer A is preferably in the range of 2 to 30 parts by mass, or more preferably in the range of 3 to 20 parts by mass, relative to 100 parts by mass of the copolymer.

(Crosslinking agent)

As to the crosslinking agent to be used for forming the porous body, a compound having good compatibility or dispersibility with the copolymer A may be used. Especially when the non-conjugated diene of the copolymer A is the norbornene derivative shown by the general formula (I), it is preferable to use a siloxane compound having plural SiH groups per one molecule. In other words, the resin to constitute the porous body is preferably a resin which is obtained by crosslinking the copolymer A by a siloxane compound having plural SiH groups per one molecule.

The siloxane compound having 2 SiH groups per one molecule may be exemplified by a SiH-containing compound (1) shown by the following general formula (II). The siloxane compound having 3 SiH groups per one molecule may be exemplified by a SiH-containing compound (2) shown by the following general formula (III).

[Chem. 2]

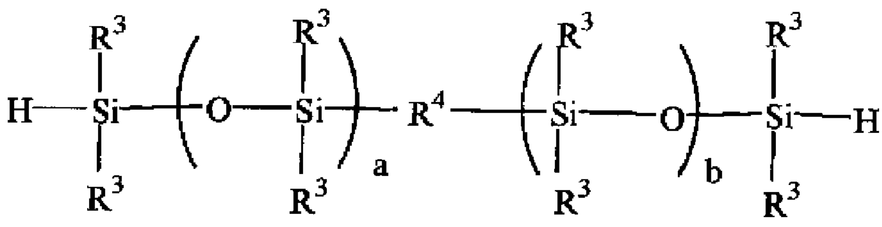

… [II]

In the formula (II), $R^3$ represents a monovalent group having 1 to 10 carbon atoms, or an optionally substituted saturated hydrocarbon or aromatic hydrocarbon, wherein they may be the same or different in one molecule; character "a" represents an integer of 0 to 20; character "b" represents an integer of 0 to 20; and $R^4$ represents a divalent organic group having 1 to 30 carbon atoms or an oxygen atom.

[Chem. 3]

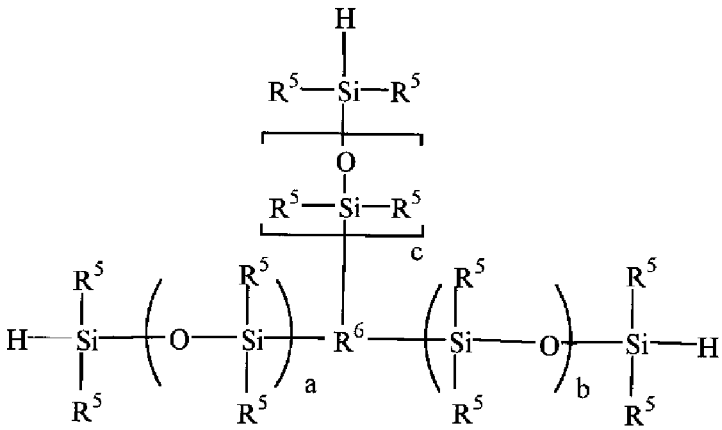

··· [III]

In formula (III), $R^5$ represents a monovalent group having 1 to 10 carbon atoms, or an optionally substituted saturated hydrocarbon or aromatic hydrocarbon, wherein they may be the same or different in one molecule; characters "a", "b", and "c" each represents independently an integer of 0 to 20; and $R^6$ represents a trivalent organic group having 1 to 30 carbon atoms.

The SiH-containing compound (1) having 2 SiH groups per one molecule shown by the general formula (II) contains the SiH groups at the both molecular terminals and has 2 SiH groups per one molecule. Specific example of $R^3$ in the general formula (II) includes a methyl group, an ethyl group, a propyl group, an isopropyl group, a butyl group, an amyl group, a cyclopentyl group, a hexyl group, a cyclohexyl group, an octyl group, a chloromethyl group, a 2-chloroethyl group, a 3-chloropropyl group, a phenyl group, a phenylmethyl group, a 2-phenylethyl group, and 2-phneylpropyl group. Preferable groups are a methyl group, an ethyl group, and a phenyl group. Character "a" is an integer of 0 to 20, and character "b" is an integer of 0 to 20. Both "a" and "b" are preferably 10 or less, more preferably 5 or less, most preferably 2 or less, or utmost preferably 2 or less equally.

The preferable SiH-containing compound (1) having 2 SiH groups per one molecule mentioned above may be exemplified by the siloxane compound shown by the following general formula.

[Chem. 4]

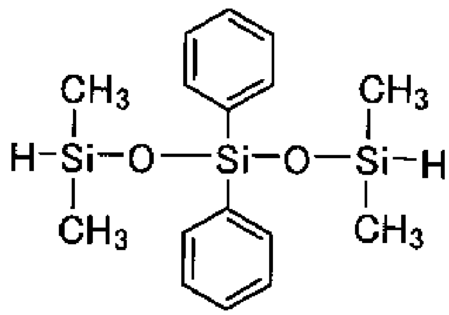

The preferable SiH-containing compound (2) having 3 SiH groups per one molecule mentioned above may be exemplified by the siloxane compound shown by the following general formula.

[Chem. 5]

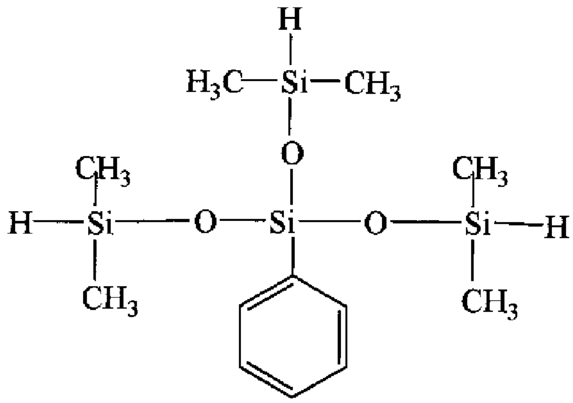

The blending ratio of the crosslinking agent in the resin of the copolymer A is preferably in the range of 3 to 25 parts by mass, or more preferably in the range of 10 to 15 parts by mass, relative to 100 parts by mass of the copolymer. If the blending ratio of the crosslinking agent is within this range, a blowing agent blows appropriately, so that prescribed porosity and continuous porosity may be obtained.

(Catalyst)

As to the catalyst, there is no restriction, provided that it is used as the catalyst in the hydrosilylation reaction. Illustrative example thereof includes platinum catalysts such as chloroplatinic acid, a platinum olefin complex, a platinum vinyl siloxane complex, a platinum black, a platinum triphenyl phosphine complex, a platinum carbonyl complex, and a platinum acetylacetonato complex; a palladium catalyst; and a rhodium catalyst.

As the platinum catalyst, a mixture of 3% Pt-CTS-CTS solution, Pt/1,3,5,7-tetravinyl-1,3,5,7-tetramethylcyclotetrasiloxane complex, and 1,3,5,7-tetravinyl-1,3,5,7-tetramethylcyclotetrasiloxane is preferably used.

The blending ratio of the catalyst in the resin of the copolymer A is preferably in the range of 0.05 to 1.0 parts by mass, or more preferably in the range of 0.1 to 0.5 parts by mass, relative to 100 parts by mass of the copolymer. If the blending ratio of the catalyst is within this range, the curing may be executed at the curing rate with which the porous body may be formed.

(Other additives)

Reaction suppressor:

Together with the foregoing crosslinking agent, a reaction suppressor may be used. Illustrative example of the reaction suppressor includes benzotriazole; an ethynyl-containing alcohol such as ethynyl cyclohexanol; acrylonitrile; amide compounds such as N,N-diallyl acetamide, N,N-diallyl benzamide, N,N,N',N'-tetraallyl-o-phthaldiamide, N,N,N',N'-tetraallyl-m-phthaldiamide, N,N,N',N'-tetraallyl-p-phthaldiamide; and sulfur, phosphorous, nitrogen, an amine compound, a sulfur compound, a phosphorous compound, tin, a tin compound, tetramethyl tetravinyl cyclotetrasiloxane, and organic peroxides such as hydroperoxides.

The reaction suppressor is used with the ratio to total 100 parts by mass of the copolymer A and other resin components being in the range of 0.0001 to 50 parts by mass, preferably in the range of 0.0001 to 30 parts by mass, more preferably in the range of 0.0001 to 20 parts by mass, still more preferably in the range of 0.0001 to 10 parts by mass, or particularly still more preferably in the range of 0.0001 to 5 parts by mass.

If the amount of the reaction suppressor is 0.0001 or more parts by mass, the crosslinking rate can be suppressed, so that the reaction can be controlled readily. If the amount of the reaction suppressor is 50 or less by mass, the crosslinking rate is not suppressed excessively, so that the production cost can be lowered.

Inorganic filler:

Inorganic filler may be specifically exemplified by light calcium carbonate, heavy calcium carbonate, talc, clay, and so forth. The kind and the blending amount of these inorganic fillers are arbitrarily chosen in accordance with the use of the porous body, while the amount of the inorganic filler is usually in the range of 0 to 400 parts by mass, or preferably in the range of 0 to 300 parts by mass, relative 100 parts by mass of the copolymer. It is preferable that the amount of the inorganic filler be determined appropriately in view of the required physical properties.

Method for Producing the Porous Body

(Production method 1)

The porous body of the present invention may be produced by the method comprising a step of forming a resin composition which comprises a copolymer of ethylene, an $\alpha$-olefin, and a non-conjugated diene, a crosslinking agent, and a pore-forming liquid material, and a step of heating the resin composition to the temperature capable of crosslinking this resin composition.

In the step of forming the resin composition, a copolymer of ethylene, an $\alpha$-olefin, and a non-conjugated diene, a crosslinking agent, and a pore-forming liquid material are kneaded by a kneader such as a Bunbury mixer and a pressurized kneader. Thereafter, the resin composition is continuously transported by using a calendar, an extruder, a conveyer belt casting, and so forth while kneading the composition to make it a sheet.

In the step of heating, the resin composition that is made to a sheet is heated to the temperature capable of crosslinking the resin composition.

Boiling point of the pore-forming material is preferably lower than the temperature capable of crosslinking by a crosslinking agent; and thus, boiling point of the pore-forming material is preferably 200°C or lower. By using a pore-forming material having the boiling temperature lower than the temperature capable of crosslinking, the pore may be formed in the step of heating for crosslinking.

Meanwhile, a step of heating to blow the pore-forming material may be executed after crosslinking the resin composition. Alternatively, the step of heating for crosslinking may be executed after the step of heating to blow the pore-forming material.

The production method of the porous body may have a step of extending the porous body. The step of extending the porous body may be executed while heating thereof in the heating step after the sheeting process.

Pore-forming material used in production method 1:

The pore-forming material is the one which is in a liquid state at normal temperature, has good dispersibility to the copolymer, and can be decomposed or vaporized by heating to generate a gas. Boiling point of the pore-forming material is preferably 200°C or lower.

The pore-forming material like this may be exemplified by olefins and cycloolefins including butane, pentane, cyclopentane, hexane, cyclohexane, pentane, cyclopentane, octane, nonane, decane, and undecane; ketones, esters, and ethers including cyclopentanone, cyclohexanone, ethyl acetate, methyl ethyl ketone, and tetrahydrofuran; aromatic compounds including benzene, toluene, xylene, and ethyl benzene; nitrogen-containing compounds including acetonitrile and N,N-dimethylformamide; halogen-containing compounds including methylene chloride, chloroform, and chlorofluorocarbons; and so forth. These pore-forming materials may be used solely or as a mixture of two or more of them. Among others, a solvent having boiling point of 150°C or lower is preferably used.

The blending amount of the pore-forming material in the resin composition is preferably in the range of 1 to 80 parts by mass, more preferably in the range of 3 to 50 parts by mass, or still more preferably in the range of 3 to 30 parts by mass, relative to 100 parts by mass of the resin composition. If the blending amount thereof is within the foregoing range, porosity of the porous body may be made in the range of 50 to 95% by volume.

(Production method 2)

As the alternative method to produce the porous body of the present invention, a method in which a gaseous pore-forming material is used may be mentioned. In this method, the resin composition that is processed to a sheet is put in a high pressure vessel, and then a gas comprising carbon dioxide, nitrogen, air, and the like is charged at high pressure to impregnate thereof into the resin composition. When the resin composition is fully impregnated with the highly pressurized gas, the pressure is released (usually to an atmospheric pressure) to form a foam nucleus in the resin composition. The foam nucleus may be grown at room temperature, but it may also be grown by heating.

After the foams are grown, the resin composition is cooled in cold water or the like to fix the foams formed in the resin composition. By so doing, the porous body may be obtained.

Pore-forming material used in production method 2:

The pore-forming material used in production method 2 is an inert gas. The inert gas usable herein is not particularly restricted, provided that the said gas is inert to the resin composition and is capable of being introduced inside the resin composition. Illustrative example thereof includes carbon dioxide, a nitrogen gas, and an air. These inert gases may be used as a mixture of them. Among these gases, carbon dioxide is preferable because the amount

impregnated into the resin composition is large and the impregnating rate is fast.

During the time of impregnating the inert gas into the resin composition, the inert gas is preferably in the supercritical state. Under the supercritical state, solubility of the inert gas into the resin composition increases so that the inert gas concentration introduced into the resin composition can be made high. If the inert gas is introduced into the resin composition with high concentration thereof, when the pressure is rapidly reduced after impregnating the inert gas into the resin composition, more foam nuclei may be generated. Accordingly, density of the pores becomes high as a result of growth of the foam nuclei, thereby giving fine foams relative to the foam ratio. Meanwhile, the critical temperature of carbon dioxide is 31°C and the critical pressure thereof is 7.4 MPa.

In the production method 2, the pressure condition during the time of impregnating the inert gas into the raw material resin composition may be arbitrarily chosen by considering the kind of the inert gas, workability in production operation, and the like, wherein the pressure is 6 MPa or higher (for example, in the range of 6 to about 100 MPa), or preferably 8MPa or higher (for example, in the range of 8 to about 100 MPa). If the pressure is 6 MPa or higher, the porous body of the present invention having appropriate foam diameter and foam density may be provided.

If carbon dioxide is used as the inert gas, the pressure condition is preferably in the range of 5 to about 100 MPa (preferably in the range of 7.4 to about 100 MPa).

When the pressure during the time of impregnating the inert gas into the resin composition is lower, the amount of the impregnated gas becomes relatively smaller; and thus, the rate to form the foam nucleus decreases, which leads to reduction in number of the foam nuclei. In this case, amount of the gas per every foam increases, thereby facilitating the growth of the foam diameter when the pressure is released.

The temperature condition during the time of impregnating the inert gas into the resin composition may be arbitrarily chosen depending on the inert gas and the raw material resin composition to be used; however, by considering workability in production operation, the temperature is preferably, for example, in the range of about 10 to about 350°C. In the continuous method in which molding and foaming are carried out at the same time by extruding the raw material resin composition in the state of being impregnated with the inert gas, the temperature is preferably in the range of 60 to 350°C.

Meanwhile, in the case when carbon dioxide is used as the inert gas, in order to keep the supercritical state thereof as mentioned above, the temperature is set at preferably 32°C or higher, especially 40°C or higher.

In order that the porosity is made in the range of 50 to 95% by volume and the continuous porosity is made 50% or more, the amount of the inert gas to be mixed is preferably in the range of 1 to 20% by mass, more preferably in the range of 1 to 10% by mass, or still more preferably in the range of 1 to 6% by mass, relative to the total amount of the resin composition.

(Production method 3)

Alternatively, the porous body of the present invention may be produced by the method which comprises a step of forming a resin by heating a resin composition comprising at least a copolymer of ethylene, an $\alpha$-olefin, and a non-conjugated diene, a crosslinking agent, and a pore-forming solid material at a temperature higher than the crosslinking temperature thereof, and a step of eluting the pore-forming material from the said resin.

In the step of forming the resin, the copolymer of ethylene, an $\alpha$-olefin, and a non-conjugated diene, a crosslinking agent, and a pore-forming solid material are kneaded by a kneader such as a Bunbury mixer and a pressurized kneader. Thereafter, the resin composition is continuously transported by using a calendar, an extruder, a conveyer belt casting, and so forth while kneading the composition to make it a sheet; and then, the resin composition that is made to a sheet is heated at the temperature capable of crosslinking the resin composition to obtain the resin.

In this production method, the pore-forming material is eluted from the resin obtained in the foregoing step.

As to the method to elute the pore-forming material from the resin, there may be mentioned a method in which the pore-forming material is eluted by pouring a solvent to the resin and a method in which the pore-forming material is eluted by soaking the resin into a solvent.

Pore-forming material used in production method 3:

The pore-forming material may be exemplified by alkaline metal salts and alkaline earth metal salts including sodium chloride, calcium carbonate, sodium tartrate, sodium citrate, and the like; sugars including sucrose and the like; and urea.

As to the pore-forming material mentioned above, it is preferable that plural pore-forming materials having different particle diameters be used.

It is preferable that the pore-forming material be used in a combination of a pore-forming material (a) having particle diameter preferably in the range of 10 to 100 $\mu$m, more preferably in the range of 20 to 90 $\mu$m, or still more preferably in the range of 30 to 80 $\mu$m, and a pore-forming material (b) having particle diameter preferably in the range

of 100 to 500 μm, more preferably in the range of 150 to 400 μm, or still more preferably in the range of 150 to 300 μm. The pore-forming materials (a) and (b) may be the same material or different materials.

The amount of the pore-forming material in the resin composition is preferably in the range of 50 to 300 parts by mass, more preferably in the range of 80 to 250 parts by mass, or still more preferably in the range of 100 to 210 parts by mass, relative to 100 parts by mass of the resin composition. If the amount of the pore-forming material is within the above-mentioned range, the porosity of the porous body may be made within the afore-mentioned range.

The amount of the pore-forming material (a) in the resin composition is preferably in the range of 10 to 70% by mass, more preferably in the range of 20 to 60% by mass, or still more preferably in the range of 20 to 50% by mass, relative to totality of the pore-forming materials (a) and (b).

As to the solvent to elute the pore-forming material, there is no restriction, provided that it can dissolve the pore-forming material; and illustrative example thereof includes water, methanol, and ethanol.

The production method of the porous body may have a step of extending the porous body. The step of extending the porous body may be executed while heating thereof in the heating step after the sheeting process.

Meanwhile, the foaming process may be executed by heretofore known methods including those described in "Plastic Foam Handbook" (edited by Hiroshi Maki and Atsushi Kosakada, Published by Nikkan Kogyo Shimbun, Ltd., published in 1973).

EXAMPLES

The present invention will be explained in more detail by Examples, but the present invention is not restricted by these Examples.

Production of Porous Body (1):

Production Example 1

The respective ingredients shown in Table 1 were stirred in a kneader (Thinky Mixer ARE-310, manufactured by Thinky Corp.) at 2000 rpm for 5 minutes, and then defoaming treatment thereof was carried out at 2500 rpm for 1 minute to obtain a mixture solution.

The mixture solution thereby obtained was applied onto the releasing side of a PET sheet having the thickness of 50 μm such that the thickness thereof might become 250 μm. Subsequently, a PET sheet having the thickness of 50 μm was put on the coated mixture solution such that the releasing side thereof might contact with the mixture solution.

A spacer having thickness of 1 mm was placed around the layered body thus obtained, and then, a steel plate having thickness of 3 mm was put on the spacer so as to cover the layered body; and then the entirety was heated in an oven at 85°C for 180 seconds. After it was taken out from the oven, one of the PET sheets was removed, and then, the remainder was dried in the oven again at 85°C for 25 minutes. By so doing, the porous body in the sheet form with the thickness of 1 mm was obtained. The porosity of the porous body of Production Example 1 was measured to be 75%.

Production Example 2

The procedure of Example 1 was repeated, except that the ratio of the respective ingredients shown in Table 1 was changed to that shown in Production Example 2, to obtain the porous body. Thickness of the porous body in the sheet form was 1 mm. The porosity of the porous body of Production Example 2 was measured to be 55%.

Production Example 3

The procedure of Example 1 was repeated, except that the ratio of the respective ingredients shown in Table 1 was changed to that shown in Production Example 3, to obtain the porous body. Thickness of the porous body in the sheet form was 1 mm. The porosity of the porous body of Production Example 3 was measured to be 95%.

Production Example 4

The procedure of Example 1 was repeated, except that the ratio of the respective ingredients shown in Table 1 was changed to that shown in Production Example 4, to obtain the porous body. Thickness of the porous body in the sheet form was 1 mm. The porosity of the porous body of Production Example 4 was measured to be 70%.

Production Example 5

The procedure of Example 1 was repeated, except that the ratio of the respective ingredients shown in Table 1 was changed to that shown in Production Example 5, to obtain the porous body. Thickness of the porous body in the sheet form was 1 mm. The porosity of the porous body of Production Example 5 was measured to be 10%.

[Table 1]

Table 1

| | | Production Example 1 | Production Example 2 | Production Example 3 | Production Example 4 | Production Example 5 |
|---|---|---|---|---|---|---|
| Blending recipe (parts by mass) | Copolymer A-1 *1 | 20 | 100 | 0 | 100 | 20 |
| | Copolymer A-2 *2 | 80 | 0 | 100 | 0 | 80 |
| | Crosslinking agent B *3 | 13.5 | 13.5 | 13.5 | 6.5 | 13.5 |
| | Platinum catalyst solution | 0.4 | 0.4 | 0.4 | 0.4 | 0.4 |
| | Reaction suppressor | 0.4 | 0.4 | 0.4 | 0.4 | 0.4 |
| | Hexane | 20 | 15 | 35 | 9 | 3 |
| Characteristics | Porosity (%) | 75 | 55 | 95 | 70 | 10 |
| | Thickness (mm) | 1 | 1 | 1 | 1 | 1 |

The used compounds shown in Table 1 are as following.

*1: Ethylene-propylene-5-vinyl-2-norbornene random copolymer (trade name "PX-062", manufactured by Mitsui Chemicals, Inc.: number-average molecular weight; 3160, ethylene content; 52.7% by mass, diene content; 4.7% by mass; complex viscosity at 25°C; 830 Pa·s (1 rpm))

*2: Ethylene-propylene-5-vinyl-2-norbornene random copolymer (trade name "PX-068", manufactured by Mitsui Chemicals, Inc.: number-average molecular weight; 920, ethylene content; 50% by mass, diene content; 11% by mass; complex viscosity at 25°C; 10 Pa·s (1 rpm))

*3 Siloxane (SiH-containing compound shown by the following general formula)

[Chem. 6]

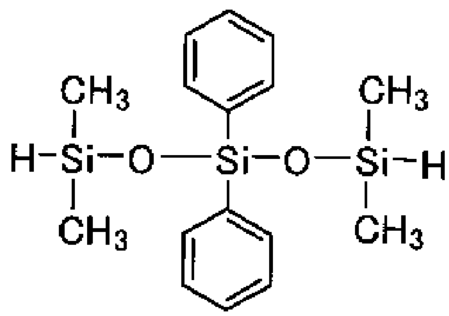

Examples 1 to 4 and Comparative Examples 1 and 2

Example 1

By using the porous body obtained in Production Example 1, the strength at 50% compression and the compression set (A) at 80°C and relative humidity of 90% were measured by the methods described below. The results thereof are shown in Table 2.

Example 2

By using the porous body obtained in Production Example 2, the strength at 50% compression and the compression set (A) at 80°C and relative humidity of 90% were measured by the methods described below. The results thereof are shown in Table 2.

Example 3

By using the porous body obtained in Production Example 3, the strength at 50% compression and the compression set (A) at 80°C and relative humidity of 90% were measured by the methods described below. The results thereof are shown in Table 2.

Example 4

By using the porous body obtained in Production Example 4, the strength at 50% compression and the compression set (A) at 80°C and relative humidity of 90% were measured by the methods described below. The results thereof are shown in Table 2.

Comparative Example 1

By using a commercially available polyurethane foam (trade name of "PORON 15P, manufactured by Rogers Inoac Corp.) as Comparative Example 1, the strength at 50% compression and the compression set (A) at 80°C and relative humidity of 90% were measured by the methods described below. The results thereof are shown in Table 2.

Comparative Example 2

By using the porous body obtained in Production Example 5, the strength at 50% compression and the compression set (A) at 80°C and relative humidity of 90% were measured by the methods described below. The results thereof are shown in Table 2.

Measurement Methods

Strength at 50% compression:

By using the respective specimens of the porous bodies obtained in Examples and Comparative Examples, measurements thereof were carried out in accordance with JIS K 6767.

Compression set (A):

A specimen having thickness of 800 μm with 40 mm x 40 mm was cut out from each of the porous bodies of Examples and Comparative Examples, and then, it was put under the 50% compression, and kept in the atmosphere at a temperature of 80°C and a relative humidity of 90% for 22 hours. After the pressure was released, this specimen was allowed to stand in the atmosphere at 23°C and relative humidity of 55% for 30 minutes. Thickness and the sizes of vertical line and horizontal line thereof were measured; and comparison of these values with respective original values thereof before the test was made; and the reduction rate relative to the originals was calculated in accordance with JIS K 6767 to obtain the compression set (A) shown by percentage.

[Table 2]

Table 2

| | | Example | | | | Comparative Example | |
|---|---|---|---|---|---|---|---|
| | | 1 | 2 | 3 | 4 | 1 | 2 |
| Evaluation result | Strength at 50% compression (kPa) | 34 | 85 | 12 | 40 | 14 | 350 |
| | Compression set (A) (%) Temperature 80°C Relative humidity 90% | 5 | 5 | 9 | 5 | 50 | 6 |

Measurement Results:

As it is apparent from Table 2, the porous bodies of Examples 1 to 4 have superior strength at 50% compression and compression set at 80°C and relative humidity of 90%. Therefore, it was found that the porous bodies of Examples 1 to 4 were excellent in both environmental characteristics and flexibility.

Production of Porous Body (2)

Production Example 6

The copolymer A, the crosslinking agent, the catalyst, the reaction suppressor, and calcium carbonate were mixed in accordance with the blending recipe shown in Table 3; and then the resulting mixture was stirred by using a planetary agitator mixer (Thinky Mixer ARE-310, manufactured by Thinky Corp.) at 2000 rpm for 3 minutes, and then defoaming treatment thereof was carried out at 2500 rpm for 1 minute to obtain a mixture solution. In addition, the blowing agent was added to the mixture solution, and then, they were stirred to obtain the foamable composition.

The foamable composition thereby obtained was applied onto the releasing side of a PET sheet treated on one side thereof with the releasing treatment and having the thickness of 50 μm such that the thickness thereof might become 100 μm. Subsequently, a different PET sheet treated on one side thereof with the releasing treatment and having the thickness of 50 μm was put on the coated foamable composition such that the releasing side thereof might contact with the foamable composition to obtain a layered body. This layered body was heated in an oven at 115°C for 180 seconds. After it was taken out from the oven, one of the PET sheets was removed, and then, the remainder was dried in the oven again at 115°C for 25 minutes. By so doing, the porous body in the sheet form was obtained. Thickness of the obtained porous body sheet was 0.4 mm. The properties of the porous body sheet thereby obtained were evaluated by the later-mentioned methods. The results thereof are shown in Table 4.

Production Example 7

Procedure of Production Example 6 was repeated, except that thickness of the foamable composition applied to the PET sheet was changed to 250 μm, to obtain the porous body sheet. Thickness of the obtained porous body sheet after drying was 0.5 mm. The properties of the porous body sheet thereby obtained were evaluated by the later-mentioned methods. The results thereof are shown in Table 4.

Production Example 8

Procedure of Production Example 6 was repeated to obtain the porous body sheet. Thickness of the obtained porous body sheet after drying was 0.85 mm. The properties of the porous body sheet thereby obtained were evaluated by the later-mentioned methods. The results thereof are shown in Table 4.

[Table 3]

Table 3

| | | Production Example 6 | Production Example 7 | Production Example 8 |
|---|---|---|---|---|
| Blending Recipe (parts by mass) | Copolymer A *1 | 100 | 100 | 100 |
| | Crosslinking agent B *2 | 7 | 7 | 7 |
| | Platinum catalyst solution *3 | 0.2 | 0.2 | 0.2 |
| | Reaction suppressor *4 | 0.4 | 0.4 | 0.5 |
| | Inorganic filler *5 | 5 | 15 | 200 |
| | Blowing agent *6 | 20 | 7 | 15 |
| Lyared body | PET sheet (μm) | 50 | 50 | 50 |
| | Thickness of foamable composition (μm) | 100 | 250 | 100 |
| | PET sheet (μm) | 50 | 50 | 50 |

*1: Ethylene-propylene-5-vinyl-2-norbornene random copolymer (trade name "PX-062", manufactured by Mitsui Chemicals, Inc.: number-average molecular weight; 3160, ethylene content; 52.7% by mass, diene content; 4.7% by mass; complex viscosity at 25°C; 830 Pa·s (1 rpm))
*2: Siloxane-type crosslinking agent (SiH-containing compound shown by the following formula, manufactured by Shin-Etsu Chemical Co., Ltd.)

[Chem. 7]

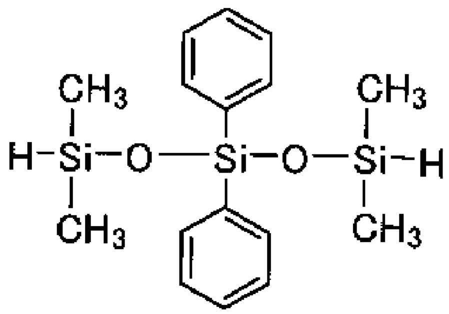

*3: Platinum catalyst (mixture of 3% Pt-CTS-CTS solution, Pt/1,3,5,7-tetravinyl-1,3,5,7-tetramethylcyclotetrasiloxane complex, and 1,3,5,7-tetravinyl-1,3,5,7-tetramethylcyclotetrasiloxane, manufactured by N.E. Chemcat Corp.)
*4: Acetylene alcohol (X-93-1036, manufactured by Shin-Etsu Chemical Co., Ltd.)
*5: Calcium carbonate (Whiton SB Red, manufactured by Shiraishi Calcium Kaisha, Ltd.)
*6: Methyl ethyl ketone

Examples 5 to 7 and Comparative Examples 3 and 4

Example 5

A specimen was prepared from the porous body sheet obtained in Production Example 6 according to the following measurement methods; and then, the compression sets (A) and (B), the strength at 50% compression, the strength at 90% compression, the resin basis weight, and the impact pressure measured via the porous body sheet were measured by the method shown below. The results thereof are shown in Table 4.

Example 6

A specimen was prepared from the porous body sheet obtained in Production Example 7 according to the

following measurement methods; and then, the compression sets (A) and (B), the strength at 50% compression, the strength at 90% compression, the resin basis weight, and the impact pressure measured via the porous body sheet were measured.

The results thereof are shown in Table 4.

Example 7

A specimen was prepared from the porous body sheet obtained in Production Example 8 according to the following measurement methods; and then, the compression sets (A) and (B), the strength at 50% compression, the strength at 90% compression, the resin basis weight, and the impact pressure measured via the porous body sheet were measured. The results thereof are shown in Table 4.

Comparative Example 3

By using a commercially available polyurethane foam (trade name of "PORON 40P, density of 0.4 g/cm$^3$; manufactured by Rogers Inoac Corp.) as Comparative Example 3, the compression sets (A) and (B), the strength at 50% compression, the strength at 90% compression, the resin basis weight, and the impact pressure measured via the foam body sheet were measured. The results thereof are shown in Table 4.

Comparative Example 4

By using a commercially available foam comprising polyolefin and polyolefin elastomer (trade name of SCF 400, density of 0.05 g/cm$^3$; manufactured by Nitto Denko Corp.) as Comparative Example 4, the compression sets (A) and (B), the strength at 50% compression, the strength at 90% compression, the resin basis weight, and the impact pressure measured via the foam body sheet were measured. The results thereof are shown in Table 4.

Porosity:

In calculation of the porosity, specimen having a square shape with length of 5 cm in each side and with a constant thickness was cut out from the porous body, thickness of the specimen was measured, and volume $V_1$ and weight $W_1$ of the specimen were measured. The apparent volume $V_2$ occupied by the air portion was calculated by using the following equation. Meanwhile, $\rho_A$ (g/cm$^3$) was used as the density of the resin to constitute the specimen.

$$\text{Apparent air portion volume } V_2 = (V_1 \cdot \rho_A - W_1)/\ \rho_A$$

$$\text{Porosity} = [(\text{apparent air portion volume } V_2)/(\text{specimen volume } V_1)] \times 100$$

Average foam diameter:

In calculation of the average foam diameter, the cross section of the porous body was observed by the scanning electron microscope S-3400 N (manufactured by Hitachi High-Technologies Corp.); and then, the average value of the diameters of arbitrarily selected 50 foams was calculated.

Continuous porosity:

The continuous porosity was measured as following. The specimen was sunk in the depth of 100 mm from water surface in distilled water at 23°C; and pressure of 15 kPa was applied to the specimen during the period of 3 minutes. Thereafter, the specimen was taken out from the water, and then water attached on surface of the specimen was removed. Weight $W_2$ of the specimen was measured, and then the continuous porosity $F_1$ was calculated by using the following equation.

$$\text{Continuous porosity } F_1\ (\%) = 100 \times (W_2 - W_1)/V_2$$

Compression set (B):

The compression set (B) was measured by the procedure as shown below in accordance with JIS K 6767. A specimen with the thickness of 800 μm, the vertical length of 40 mm, and the horizontal length of 40 mm was obtained from each of the porous bodies of Examples and Comparative Examples; and this specimen was compressed by 50% in the direction of thickness, and then kept under the atmosphere at a temperature of 70°C for 22 hours. After it was released from this condition, it was allowed to stand under the atmosphere at a temperature of 23°C for 30 minutes, and then, thickness and the sizes of vertical and horizontal sides were measured. By comparing it with the original sizes before the test, the reduction rate relative to the original was calculated to obtain the compression set (B) shown by percentage.

Strength at 90% compression:

By using the respective specimens of the porous bodies obtained in Examples and Comparative Examples, measurements thereof were carried out in accordance with JIS K 6767.

Resin basis weight (1):

The resin basis weight (1) was obtained as following. The porous body used in the cushioning evaluation test (A) described below was cut into the pieces having the vertical length of 2 cm and the horizontal length of 2 cm; and they were stacked so as to give the total thickness of 0.15 cm. The weight of the porous body sample thus stacked was measured and divided by the cross section area (4 $cm^2$) to obtain the weight of the porous body per the unit area.

Impact pressure:

The "impact pressure" was obtained by the cushioning evaluation test (A) (called Sekisui method) as described below. That is, the porous bodies cut to the vertical length of 2 cm and the horizontal length of 2 cm were stacked so as to give the total thickness of 0.15 cm to obtain the porous body sample.

A steel plate having the vertical length of 6 cm, the horizontal length of 6 cm, and the thickness of 2 mm, a pressure sensitive paper cut into the vertical length of 2 cm and the horizontal length of 2 cm (Prescale Paper for medium pressure, manufactured by Fujifilm Corp.), the above-mentioned porous body sample, and a steel plate having the vertical length of 6 cm, the horizontal length of 6 cm, and the thickness of 1 mm were stacked in this order from the bottom.

Then, four corners of the stack were clamped under the state of compression such that thickness of the porous body sample might become 50% from the original thickness to obtain the evaluation sample. This evaluation sample was fixed to a jig which had an open space in the central part thereof; and then, the iron ball with the weight of 55g was dropped from the height of 1 m toward the evaluation sample such that the maximum impact force might be added to the central part of the evaluation sample. The impact pressure was calculated by image analysis of the pressure sensitive paper by using the pressure image analysis system (Data Shot FPD-100, manufactured by Fujifilm Corp.). It can be said that when the calculated pressure is lower, the porous body has better cushioning property.

[Table 4]

Table 4

| | | Example | | | Comparative Example | |
|---|---|---|---|---|---|---|
| | | 5 | 6 | 7 | 3 | 4 |
| Characteristics | Porosity (vol.%) | 75 | 60 | 86 | - | - |
| | Thickness of foam body (mm) | 0.4 | 0.5 | 0.85 | 0.45 | 0.5 |
| | Average foam diameter (μm) | 200 | 200 | 250 | 200 | 50 |
| | Continuous porosity (%) | 90 | 60 | 90 | 90 | 15 |

(continued)

| | | Example | | | Comparative Example | |
|---|---|---|---|---|---|---|
| | | 5 | 6 | 7 | 3 | 4 |
| Evaluation result | Compression set (A) (%) | 5.5 | 5.0 | 5.0 | 45 | 50 |
| | Compression set (B) (%) | 4.6 | 4.5 | 3.5 | 4.2 | 50 |
| | Strength at 50% compression (kPa) | 100 | 180 | 5 | 5 | 5 |
| | Strength at 90% compression (kPa) | 220 | 350 | 80 | 30000 | 50 |
| | Resin basis weight (1) (g/m2) | 33 | 52 | 18 | - | - |
| | Impact pressure measured via foam body sheet (Mpa) | 22 | 18 | 150 | 240 | >383(*1) |
| *1: Detection limit | | | | | | |

Measurement results:

As it is apparent from Table 4, it was found that the porous body sheets of Examples 5 and 6 had especially lower impact pressure in spite of thinner thickness as compared with the commercially available goods. Namely, the porous body sheet of the present invention has superior cushioning property in spite of thinner thickness as compared with the commercially available goods.

Examples 8 to 10 and Comparative Examples 5 to 7

Example 8

Preparation of the porous body:

The respective ingredients shown in Table 5 were mixed and stirred in a planetary agitator mixer (Thinky Mixer ARE-310, manufactured by Thinky Corp.) at 2000 rpm for 5 minutes, and then defoaming treatment thereof was carried out at 2500 rpm for 1 minute to obtain a mixture solution. Then, the pore-forming materials (1) and (2) respectively were added to this mixture solution, and then they were kneaded. The solution thereby obtained was applied onto the releasing PET (polyethylene terephthalate) having the thickness of 50 μm to obtain a wet sheet having the thickness of 250 μm. A releasing PET having the thickness of 50 μm was attached onto this wet sheet such that the releasing side thereof might contact with the wet sheet; and then, this was put in in an oven at 70°C. After 180 seconds, it was taken out from the oven; and one of the PET sheets was removed, and then, the remainder was dried in the oven again at 70°C for 15 minutes to obtain the olefin composite having the thickness of approximately 250 μm. The composite body thus obtained was washed by water to elute sodium chloride out to obtain the porous body having continuous pores.

The porosity of the porous body thus obtained was 50% by volume as calculated from the volume and the weight thereof.

The cross section of the obtained porous body was observed by the scanning electron microscope S-3400 N (manufactured by Hitachi High-Technologies Corp.); and then, the diameters of 50 pores and broken pores that were connected therebetween were measured to obtain the average diameters of the pores and the broken pores. The average diameter of the pores was 240 μm and the average diameter of the broken pores was 25 μm.

Then, the continuous porosity was obtained as following. The porous body was sunk in water; and after the porous body was compressed, it was released to impregnate the porous body with water. The impregnated water amount was calculated by comparing the masses before and after the impregnation; and then it was compared with the mass which was obtained by assuming that the above-calculated entire porosity was filled with water. The continuous porosity thus obtained was 72%.

The expansion ratio was calculated by dividing the mass of the unfoamed composition by the mass of the same volume of the porous body. The expansion ratio thereof was 2.

Example 9

The reaction of Example 8 was repeated, except that amounts of the pore-foaming materials (a) and (b) were changed to those shown in Table 5, to obtain the continuous pore porous body.

Physical properties thereof were measured similarly to Example 8 to obtain the porosity of 79% by volume, the average pore diameter of 220 μm, the average diameter of the broken pores of 25 μm, the continuous porosity of 80%, and the expansion ratio of 4.5. The properties of the continuous pore porous body of Example 9 are shown in Table 6.

Example 10

Without using the pore-forming materials (a) and (b), the blowing agent was added with the ratio shown in Table 5. The composition thus blended was stirred by using a planetary agitator mixer (Thinky Mixer ARE-310, manufactured by Thinky Corp.) at 2000 rpm for 3 minutes, and then defoaming treatment thereof was carried out at 2500 rpm for 1 minute to obtain a mixture solution. Then, the blowing agent was added to the mixture solution, and then, they were stirred to obtain the foamable composition.

The foamable composition thereby obtained was applied onto the releasing side of a PET sheet treated on one side thereof with the releasing treatment and having the thickness of 50 μm such that the thickness thereof might become 250 μm. Subsequently, a different PET sheet treated on one side thereof with the releasing treatment and having the thickness of 50 μm was put on the coated foamable composition such that the releasing side thereof might contact with the foamable composition to obtain a layered body. This layered body was heated in an oven at 115°C for 180 seconds. After it was taken out from the oven, one of the PET sheets was removed, and then, the remainder was dried in the oven again at 115°C for 25 minutes. By so doing, the porous body in the sheet form was obtained.

Physical properties thereof were measured similarly to Example 8 to obtain the porosity of 65% by volume, the average pore diameter of 200 μm, the average diameter of the broken pores of 25 μm, the continuous porosity of 70%, and the expansion ratio of 2.9.

Comparative Example 5

Preparation of soft polyurethane foam (porous body):

To the mixture of 10 g of polypropylene glycol (trade name of Sannix GP-3000, manufactured by Sanyo Chemical Industries, Ltd.), 0.3 g of 1,4-butanediol, foam stabilizer (F-242T, Manufactured by Shin-Etsu Chemical Co., Ltd.), 0.01 g of stannous octoate, and 0.1 g of water was added 2.03 g of polyisocyanate (trade name of Polymeric MDI Coronate 1130, manufactured by Nippon Polyurethane Industry, Co., Ltd.); and the resulting mixture was stirred under ice-cooling for 1 minute. Then, after the resulting mixture was applied onto a PET sheet having the thickness of 50 μm such that the thickness thereof might become 1 mm, it was heated in an oven at 150°C for 15 minutes to obtain the soft polyurethane foam (porous body). The calculated expansion ratio was 3.

Comparative Example 6

Procedure of Comparative Example 5 was repeated, except that the added amount of water was changed to 0.3 g, to synthesize the soft polyurethane foam (porous body). The calculated expansion ratio was 10.

Comparative Example 7

Preparation of polyolefin foam (porous body):

After the mixture of 50 g polyethylene resin (trade name of EXACT 3027, manufactured by Exxon Mobil Chemical Co.), 2.5 g of azodicarbonamide, 0.15 g of 2,6-4-dit-butyl-p-cresol, and 0.5 g of zinc oxide was kneaded by a mixer (Labo Plastomill R-100, manufactured by Toyo Seiki Seisaku-Sho, Ltd.) (condition: at 130°C and 60 rpm for 3 minutes), it was hot pressed (130°C and 100 $kgf/cm^2$) to obtain a sheet having the thickness of 0.3 mm. The both sides of the obtained sheet was irradiated for crosslinking by using an electron beam irradiating apparatus with the acceleration voltage of 720 kV and with the dose amount of 5 Mrad; and then, it was heated for blowing in an oven at 220°C for 3 minutes to obtain the polyolefin foam (porous body). The expansion ratio thereof was 10.

[Table 5]

Table 5

| | | Example 8 | Example 9 | Example 10 |
|---|---|---|---|---|
| Blending recipe (parts by mass) | Copolymer A | 100 | 100 | 100 |
| | Crosslinking agent B | 15.2 | 15.2 | 8 |
| | Platinum catalyst solution | 0.4 | 0.4 | 0.2 |
| | Reaction suppressor | 0.4 | 0.4 | 0.4 |
| | Pore-forming material (a) | 100 | 350 | - |
| | Pore-forming material (b) | 100 | 150 | - |
| | Blowing agent | - | - | 8 |

The used compounds shown in Table 5 are as following.

Copolymer A: Ethylene-propylene-5-vinyl-2-norbornene random copolymer (trade name "PX-068", manufactured by Mitsui Chemicals, Inc.: number-average molecular weight; 920, ethylene content; 50% by mass, diene content; 11% by mass; complex viscosity at 25°C; 10 Pa·s (1 rpm))

Crosslinking agent B: Siloxane (SiH-containing compound shown by the following formula)

[Chem. 8]

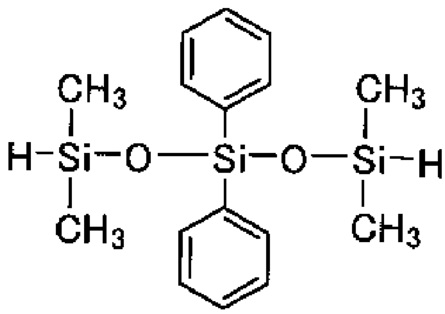

Platinum catalyst solution: 3% Pt-CTS-CTS solution (manufactured by N.E. Chemcat Corp.)

Reaction suppressor: X-93-1036 (manufactured by Shin-Etsu Chemical Co., Ltd.)
Pore-forming material (a): sodium chloride classified into the diameter of 200 to 250 μm
Pore-forming material (b): sodium chloride classified into the diameter of 80 μm
Blowing agent: methyl ethyl ketone

Evaluation Methods

Measurement of compressive elastic modulus:

The compressive elastic modulus was measured as follows. The afore-mentioned sheet sample was molded to the width of 2 cm, the depth of 2 cm, and the height of 1 cm, and then, the compression test thereof was carried out at the strain rate of 1 mm/minute by using the universal tester Tensilon RTC-1310A, manufactured by A&D Company, Ltd.). The compressive elastic modulus was calculated from the average slope of the stress-strain curve in the compression ratio range of 20 to 50%.

The compressive elastic modulus of the liquid olefin used in Examples 8 to 10 was 5 MPa, while that for the

polyurethane of Comparative Examples 5 and 6 was 30 MPa, and that for the polyolefin of Comparative Example 7 was 76 MPa.

Meanwhile, the polyurethane sheet for measurement of the compressive elastic modulus was obtained as follows. Namely, procedure of Comparative Example 7 was repeated, except that water was not added and defoaming was done for 1 minute during the time of agitation by using Thinky Mixer (manufactured by Thinky Corp.), to obtain the polyurethane sheet (expansion ratio of 1.05).

The compressive elastic modulus of the polyolefin was the compressive elastic modulus of the sheet before the foaming process.

Resin basis weight (2):

The resin basis weight (2) was obtained as follows. The porous body used in the cushioning evaluation test (B) described below was cut into the pieces having the vertical length of 2 cm and the horizontal length of 2 cm; and the pieces were stacked or the piece was sliced so as to give the total thickness of 0.5 mm. The porous body sample thus obtained was weighed, and mass thereof was divided by the cross section area (4 $cm^2$) to obtain the weight of the porous body per the unit area.

Cushioning evaluation test (B):

The porous body was cut into the square with the both side lengths of 2 cm; and the pieces were stacked or the piece was sliced so as to give the porous sample having the thickness of 0.5 mm. A glass plate having the thickness of 0.7 mm was placed under this porous sample having the thickness of 0.5 mm to obtain the stacked sample; and this stacked sample was placed between two steel plates having the thickness of 2 mm via the spacer so as to give the test body having the porous body compressed by 50% in its thickness.

The test to drop the iron ball weighed 16 g from the height of 1 m toward the test body with the total of 10 times for each test body; and if the glass was not broken, it was judged to be passed (P), while if the glass was broken even once during 10 tests, it was judged to be failed (F). The results thereof are shown in Table 6.

[Table 6]

Table 6

| | | Example | | | Comparative Example | | |
|---|---|---|---|---|---|---|---|
| | | 8 | 9 | 10 | 5 | 6 | 7 |
| Characteristics | Porosity (vol.%) | 50 | 79 | 65 | 65 | 89 | 90 |
| | Thickness of foam body (mm) | 0.5 | 1.2 | 0.8 | 2.5 | 5.5 | 1 |
| | Average foam diameter (μm) | 250 | 250 | 200 | 400 | 450 | 250 |
| | Continuous porosity (%) | 72 | 80 | 70 | 85 | 90 | 0 |
| | Compression set (A) (%) | 3 | 5 | 5 | 40 | 37 | 50 |
| | Strength at 50% compression (kPa) | 280 | 70 | 130 | 55 | 35 | 250 |
| | Compressive elastic modulus (MPa) | 5 | 5 | 5 | 30 | 30 | 76 |
| | Expansion ratio (B) | 2 | 4.5 | 2.9 | 3 | 10 | 10 |
| | (A)×(B) (MPa·ratio) | 10 | 22.5 | 14.5 | 90 | 300 | 760 |
| Resin basis weight (2) (g/m2) | | 215 | 83 | 150 | 165 | 50 | 50 |
| Cushioning performance | | P | P | P | F | F | F |

As it is apparent from Table 6, according to the present invention, the porous body having superior cushioning property can be provided.

## Claims

1. A porous body, which is formed of a resin obtained by crosslinking a copolymer of ethylene, an α-olefin, and a non-conjugated diene, wherein
porosity of the porous body is in the range of 50 to 95% by volume,
strength of the porous body at 50% compression is 300 kPa or less, and
compression set (A) under atmosphere at a temperature of 80°C and a relative humidity of 90% is 20% or less.

2. The porous body according to claim 1, wherein expansion ratio thereof is less than 3, or expansion ratio thereof is 3 or more and continuous porosity thereof is 40% or more.

3. The porous body according to claim 1 or 2, wherein the copolymer is a copolymer of ethylene, propylene, and a norbornene derivative.

4. The porous body according to any of claims 1 to 3, wherein the resin is formed of a resin obtained by crosslinking the copolymer by a siloxane compound having plural SiH groups per one molecule thereof.

5. The porous body according to any of claims 1 to 4, wherein resin basis weight thereof is 25 $g/m^2$ or more.

6. The porous body according to any of claims 1 to 5, wherein a pressure measured via the porous body when a weight having mass of 55 g is dropped from a height of 1 m toward the porous body under 50% compression is 25 MPa or less.

7. The porous body according to any of claims 1 to 6, wherein compressive elastic modulus of raw material resin thereof is in the range of 0.1 to 25 MPa, expansion ratio thereof is in the range of 2 to 7, and product of the compressive elastic modulus of the raw material resin and the expansion ratio is 75 or less (MPa·ratio).

## Amended claims under Art. 19.1 PCT

**1.** (after amendment) A porous body, which is formed of a resin obtained by crosslinking a copolymer of ethylene, an α-olefin, and a non-conjugated diene in the presence of a pore-forming material, wherein
porosity of the porous body is in the range of 50 to 95% by volume,
strength of the porous body at 50% compression is 300 kPa or less, and
compression set (A) under atmosphere at a temperature of 80°C and a relative humidity of 90% is 20% or less.

**2.** The porous body according to claim 1, wherein expansion ratio thereof is less than 3, or expansion ratio thereof is 3 or more and continuous porosity thereof is 40% or more.

**3.** The porous body according to claim 1 or 2, wherein the copolymer is a copolymer of ethylene, propylene, and a norbornene derivative.

**4.** The porous body according to any of claims 1 to 3, wherein the resin is formed of a resin obtained by crosslinking the copolymer by a siloxane compound having plural SiH groups per one molecule thereof.

**5.** The porous body according to any of claims 1 to 4, wherein resin basis weight thereof is 25 $g/m^2$ or more.

**6.** The porous body according to any of claims 1 to 5, wherein a pressure measured via the porous body when a weight having mass of 55 g is dropped from a height of 1 m toward the porous body under 50% compression is 25 MPa or less.

**7.** The porous body according to any of claims 1 to 6, wherein compressive elastic modulus of raw material resin thereof is in the range of 0.1 to 25 MPa, expansion ratio thereof is in the range of 2 to 7, and product of the compressive elastic modulus of the raw material resin and the expansion ratio is 75 or less (MPa·ratio).

**8.** (added claim) The porous body according to any of claims 1 to 7, wherein the pore-forming material is a solvent having boiling point of 150°C or lower.

**9.** (added claim) The porous body according to claim 8, wherein the pore-forming material is at least one kind

selected from hexane and methyl ethyl ketone.

**10.** (added claim) The porous body according to any of claims 1 to 7, wherein the pore-forming material is at least one kind selected from alkali metal salts and alkaline earth metal salts.

**11.** (added claim) The porous body according to claim 10, wherein the pore-forming material is sodium chloride.

**12.** (added claim) The porous body according to any of claims 1 to 11, wherein inorganic filler is contained further therein.

**INTERNATIONAL SEARCH REPORT**

International application No.
PCT/JP2013/059416

A. CLASSIFICATION OF SUBJECT MATTER
*C08J9/12*(2006.01)i

According to International Patent Classification (IPC) or to both national classification and IPC

B. FIELDS SEARCHED

Minimum documentation searched (classification system followed by classification symbols)
C08J9/00-9/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-179825 A (Nitto Denko Corp.),<br>26 June 2002 (26.06.2002),<br>claim 1; paragraphs [0029] to [0030]; examples<br>(Family: none) | 1-2,5-7<br>1-7 |
| Y | JP 2001-031789 A (Mitsui Chemicals, Inc.),<br>06 February 2001 (06.02.2001),<br>claims 1 to 2; paragraph [0118]; examples<br>& US 2005/0154132 A1 & EP 1088855 A1<br>& WO 2000/055251 A1 & CN 1680474 A | 1-7 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 June, 2013 (25.06.13) | 02 July, 2013 (02.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005007731 A